# EUROPÄISCHE PATENTSCHRIFT

(11) **EP 4 117 945 B1**
(45) Veröffentlichungstag und Bekanntmachung des Hinweises auf die Patenterteilung: **24.04.2024**
(21) Anmeldenummer: 21708183.5
(22) Anmeldetag: 24.02.2021
(51) Int. Cl.: B60K 1/04, B62D 25/20, H01M 10/613

(54) **ROHBAUSTRUKTUR FÜR EINEN ELEKTRISCH ANTREIBBAREN KRAFTWAGEN**
BODYSHELL STRUCTURE FOR AN ELECTRICALLY POWERED CAR
STRUCTURE DE CARROSSERIE POUR UNE VOITURE À ALIMENTATION ÉLECTRIQUE

(30) Priorität: 09.03.2020 DE 102020001540
(43) Veröffentlichungstag der Anmeldung: 18.01.2023
(73) Patentinhaber: Mercedes-Benz Group AG, 70372 Stuttgart (DE)
(72) Erfinder: BALKE, Clemens, 73734 Esslingen (DE); HÄFNER, Thorsten, 72622 Nürtingen (DE); TALKE, Anja, 73230 Kirchheim Teck (DE)
(74) Vertreter: Novagraaf Group
(86) Internationale Anmeldenummer: PCT/EP2021/054479
(87) Internationale Veröffentlichungsnummer: WO 2021/180469

(56) Entgegenhaltungen:
- EP-B1- 2 704 915
- WO-A1-2020/013120
- DE-A1-102017 000 266
- US-A1- 2012 237 803

## Beschreibung

Die Erfindung betrifft eine Rohbaustruktur für einen elektrisch antreibbaren Kraftwagen gemäß dem Oberbegriff des Anspruchs 1.

Die derzeit bei elektrisch betriebenen Kraftwagen üblichen Energiespeicher beruhen meist auf der Lithium-Ionen-Technologie. Hierbei ist es bei heutigen Kraftwagen mit elektrischem Antrieb eine große Herausforderung, wenn es bei einem derartigen Energiespeicher zu einer sogenannten "Thermal Propagation", also einem thermischen Ereignis beziehungsweise einer Wärmeausbreitung kommt. Dies tritt unter anderem auf, wenn eine Batteriezelle des elektrischen Energiespeichers durch einen internen Kurzschluss zu warm wird und sich die Materialien in einer exothermen Reaktion auflösen ("Thermal Runaway"). Die Temperatur steigt dabei immer weiter an und es kann zum Öffnen der Zelle und zum Brand in dem elektrischen Energiespeicher kommen. Die entstehende Wärme wird auf andere Batteriezellen des elektrischen Energiespeichers übertragen, sodass die eine überhitzte Zelle zur Überhitzung weiterer Zellen des elektrischen Energiespeichers führt beziehungsweise beiträgt.

Die freigesetzte Energie ist ohne Gegenmaßnahmen so groß, dass das Batteriegehäuse des Energiespeichers schmelzen und ein Sicherheitsrisiko für die Insassen des elektrisch betriebenen Fahrzeugs entstehen kann. Während des Öffnens der Zelle werden zudem Partikel und Gase in dem elektrischen Energiespeicher freigesetzt. Das freigesetzte Gas wird üblicherweise als Ventinggas, als zu entlüftendes oder auszulassendes Gas, bezeichnet, mit dem Partikel mitgerissen werden.

Diese erhebliche Gasmenge muss aus dem Energiespeicher herausgeführt werden, ohne dass eine Gefahr für die Insassen des Kraftwagens oder in der Nähe des Kraftwagens befindliche Personen besteht. Dazu muss das bis zu 900° heiße Gas außerhalb der Fluchtwege geleitet werden. Zudem ist das Gas leicht entzündlich und Feuer außerhalb des Energiespeichers muss unbedingt vermieden werden. Die Partikel, die zusätzlich ausgestoßen werden, glühen und können so das Gas entzünden. Dies wird erst außerhalb des elektrischen Energiespeichers relevant, da im Inneren durch die erheblichen Gasmengen nicht ausreichend Sauerstoff für eine Verbrennung zur Verfügung steht. Treten derartige, glühende Partikel insbesondere bei einem Hybridfahrzeug in die Umgebung des Kraftwagens aus, so kann dies außerdem zur Entzündung von Kraftstoff führen, welcher beispielsweise für einen Verbrennungsmotor mitgeführt wird, sofern beispielsweise ein entsprechender Kraftstofftank beschädigt ist.

Um entsprechendes Ventinggas in die Umgebung des Kraftwagens abzuleiten, ist aus der EP 2 704 915 B1 bereits eine Rohbaustruktur für einen elektrisch antreibbaren Kraftwagen bekannt, welche einen durch eine Mehrzahl von miteinander verbundenen, jeweilige Hohlkammern begrenzenden Strukturbauteilen gebildeten Entlüftungskanal umfasst. Als Strukturbauteile sind hierbei insbesondere jeweilige Querträger sowie Längsträger beziehungsweise Seitenschweller vorgesehen. Der Entlüftungskanal weist dabei wenigstens eine Einströmöffnung zum Einströmen von aus einer Antriebsbatterie des Kraftwagens im Falle eines thermischen Ereignisses austretendem Ventinggas sowie eine Auslassöffnung auf, über welche das Ventinggas in eine Umgebung des Kraftwagens auslassbar ist.

Aufgabe der vorliegenden Erfindung ist es, eine Rohbaustruktur zu schaffen, mittels welcher sich ein weiter verbesserter Schutz insbesondere der Fahrzeuginsassen im Falle eines thermischen Ereignisses innerhalb der Antriebsbatterie ergibt.

Diese Aufgabe wird erfindungsgemäß durch eine Rohbaustruktur mit den Merkmalen des Anspruchs 1 gelöst. Vorteilhafte Ausgestaltungen mit zweckmäßigen Weiterbildungen der Erfindung sind Gegenstand der abhängigen Ansprüche.

Die erfindungsgemäße Rohbaustruktur für einen elektrisch antreibbaren Kraftwagen umfasst wenigstens einen durch eine Mehrzahl von miteinander verbundenen, jeweilige Hohlkammer begrenzenden Strukturteilen, insbesondere in Form von Längs- und Querträgern sowie Seitenschwellern, gebildeten Entlüftungskanal, welcher wenigstens eine Eingangsöffnung zum Einströmen von aus einer auch als Traktionsbatterie bezeichneten, einen wenigstens einen Elektromotor umfassenden Elektroantrieb mit Energie versorgenden Antriebsbatterie des Kraftwagens im Falle eines thermischen Ereignisses austretendem Ventinggas und wenigstens eine Auslassöffnung aufweist, über welche das Ventinggas in die Umgebung des Kraftwagens auslassbar ist beziehungsweise ausgeblasen wird. Um dabei einen weiter verbesserten Schutz, insbesondere der Insassen des Kraftwagens im Falle eines thermischen Ereignisses innerhalb der Antriebsbatterie zu erreichen, ist es erfindungsgemäß vorgesehen, dass innerhalb des durch die Strukturbauteile der auch als Rohbau oder Karosserierohbau bezeichneten Rohbaustruktur gebildeten Entlüftungskanals wenigstens eine Ventinggas-Behandlungseinrichtung zur gezielten Behandlung des Ventinggases und/oder des mit diesem mitgeführten, aus der überhitzen Antriebsbatterie beziehungsweise einer von deren Zellen beziehungsweise Zellmodule vom Ventinggas mitgerissenen Partikel vorgesehen ist.

Unter der Ventinggas-Behandlungseinrichtung ist dabei insbesondere eine Einrichtung zu verstehen, mittels welcher einerseits die Temperatur des Ventinggases oder von mit diesem mitgeführten Partikeln gezielt reduziert beziehungsweise abgekühlt wird und/oder mit dem Ventinggas mitgeführte Partikel gezielt gesammelt, gefiltert oder dergleichen innerhalb der Behandlungseinrichtung abgeschieden werden, um deren Austritt aus dem Entlüftungskanal an die Umgebung des Kraftwagens zumindest weitestgehend zu unterbinden. Insbesondere ist hierbei auch eine Kombination der beschriebenen Maßnahmen denkbar, also sowohl ein gezieltes Abkühlen des Ventinggases beziehungsweise der mitgeführten Partikel einerseits als auch ein gezieltes Sammeln, Filtern oder Abscheiden dieser mit dem Ventinggas mitgeführten Partikel andererseits. Hierbei bleibt insbesondere festzuhalten, dass im Zusammenhang mit der hier vorliegenden Erfindung unter dem Begriff "Behandeln" demzufolge auch das Sammeln, Filtern und Abscheiden jeweiliger Partikel im beziehungsweise aus dem Ventinggas zu verstehen ist.

Insgesamt ist somit erkennbar, dass vorliegend eine Rohbaustruktur geschaffen ist, bei welcher durch die entsprechenden Rohbau-Strukturbauteile (Querträger, Längsträger, insbesondere Seitenschweller etc.) wenigstens ein Entlüftungskanal gebildet wird, mittels welchem Ventinggas und eventuell mitgeführte Partikel aus der Antriebsbatterie gezielt in die Rohbaustruktur beziehungsweise den Entlüftungskanal eingeleitet und bis zu einer entsprechend sicheren, insbesondere im hinteren Bereich des Fahrzeugs vorgesehenen Auslassöffnung geleitet werden, wobei zwischen der Einlassöffnung und der Auslassöffnung die erfindungsgemäße Ventinggas-Behandlungseinrichtung vorgesehen ist, mittels welcher das Ventinggas und/oder gegebenenfalls mitgeführte Partikel derart behandelt werden, dass diese am Austritt aus dem Kraftwagen entsprechend unkritisch hinsichtlich eines Entzündens oder dergleichen sind.

In weiterer Ausgestaltung der Erfindung hat es sich dabei als vorteilhaft gezeigt, wenn die Behandlungseinrichtung zum Abkühlen des Ventinggases und der mitgeführten heißen Partikel ausgebildet ist. Es hat sich nämlich gezeigt, dass die bloße Senkung der Temperatur des Ventinggases beziehungsweise der mitgeführten Partikel bereits zu einer beträchtlichen Reduzierung der Gefahren des aus dem Kraftwagen austretenden Ventinggases und der Partikel führt.

Eine weitere vorteilhafte Ausführungsform der Erfindung sieht vor, dass die Behandlungseinrichtung zum Sammeln, Filtern oder dergleichen Abscheiden der mit dem Ventinggas mitgeführten Partikel ausgebildet ist. Es hat sich nämlich gezeigt, dass gerade die mit dem Ventinggas mitgeführten Partikel ein erhebliches Sicherheitsrisiko darstellen, sodass deren Trennung von dem Ventinggas zu einem erheblichen Sicherheitsvorteil führt.

Des Weiteren hat es sich als vorteilhaft gezeigt, wenn die Behandlungseinrichtung eine Konturierung oder dergleichen Labyrinthpfad zum Verlängern des Strömungswegs des Ventinggases durch den Entlüftungskanal und/oder zum Sammeln von mit dem Ventinggas mitgeführten Partikeln aufweist. Die labyrinthartige Führung des Gases und der Partikel durch den Entlüftungskanal stellt somit eine einfache Möglichkeit dar, einerseits durch die entsprechenden Barrieren und der damit auch verbundenden Verlängerung des Strömungswegs das Gas und die Partikel abzukühlen, und andererseits durch die entsprechenden Barrieren des Labyrinths die mit dem Ventinggas mitgeführten Partikel zu sammeln und aus dem Gasstrom quasi abzuscheiden. Der erfindungsgemäß verlängerte Strömungsweg des Ventinggases bewirkt außerdem, dass das Ventinggas nach Austritt aus der Antriebsbatterie beziehungsweise den Zellmodulen eine längere Zeitspanne im Kraftwagen zurückgehalten wird, bevor es an die Umgebung abgeblasen wird. Diese trägt insbesondere zur erhöhten Sicherheit auch von umstehenden Personen bei, welche sich dadurch noch weiter vom Kraftwagen entfernen können.

Eine weitere vorteilhafte Ausführungsform der Erfindung sieht vor, dass die Behandlungseinrichtung ein Filter zum Sammeln von mit dem Ventinggas mitgeführten Partikeln aufweist. Ein derartiges Filterelement kann dabei nicht nur zum Sammeln der Partikel dienen, sondern aufgrund von dessen Struktur auch zu entsprechenden Turbulenzen oder dergleichen des Ventinggases führen, die zu einer erheblichen Abkühlung des Gases beitragen.

In weiterer Ausgestaltung der Erfindung hat es sich als vorteilhaft gezeigt, wenn die Behandlungseinrichtung eine Beaufschlagungseinrichtung aufweist, mittels welcher das Ventinggas und/oder die mit diesem mitgeführten Partikel mit einem Medium, insbesondere mit Wasser, beaufschlagbar ist beziehungsweise sind. Durch eine derartige Beaufschlagungseinrichtung können beispielsweise das Ventinggas und die Partikel äußerst schnell und zuverlässig abgekühlt werden.

In weiterer Ausgestaltung der Erfindung weist eine Bodengruppe der Rohbaustruktur mehrere Querträger auf, welche außenseitig mit jeweiligen Seitenschwellern verbunden sind und mit diesen einen jeweiligen Aufnahmeraum für wenigstens ein Batteriemodul des Antriebsspeichers begrenzen, wobei jeweilige Eingangsöffnungen für Ventinggas in den Querträgern vorgesehen sind. Mit anderen Worten wird bei einem thermischen Ereignis innerhalb der jeweiligen Batteriezelle beziehungsweise des jeweiligen Batteriemoduls Ventinggas über eine entsprechende Eingangsöffnung des jeweils benachbarten Querträgers eingeleitet und von diesem aus weiter zum seitlich korrespondierenden Seitenschweller, von welchem aus die weitere Abführung des Ventinggases und der eventuell mitgeführten Partikel erfolgen kann.

Alternativ hierzu hat sich eine Bodengruppe als vorteilhaft gezeigt, bei welcher mehrere Querträger außenseitig mit jeweiligen, in einem Abstand voneinander angeordneten Seitenschwellern verbunden sind und mit diesen einen jeweiligen Aufnahmeraum für wenigstens ein Batteriemodul des Antriebsspeichers begrenzen, wobei jeweilige Eingangsöffnungen des Ventinggases in den Seitenschwellern vorgesehen sind. Hierbei ist es demzufolge beispielsweise möglich, das Ventinggas zunächst aus dem jeweiligen Batteriemodul beziehungsweise der jeweiligen Batteriezelle in den Aufnahmeraum zu leiten, und von diesem aus durch eine Eingangsöffnung in den korrespondierenden Seitenschweller. Dies stellt eine äußerst einfache Ausgestaltung des Entlüftungskanals dar.

Eine weitere vorteilhafte Ausführungsform der Erfindung sieht vor, dass die Querträger im Bereich eines Mittelkanals über jeweilige Mittelkanalbügel geschlossen sind. Derartige Mittelkanalbügel dienen dabei nicht nur zum Verschluss der jeweiligen Querträger, sondern beispielsweise auch zur Halterung jeweiliger Medienkanäle und Leitungen.

Schließlich hat es sich als vorteilhaft gezeigt, wenn eine Bodengruppe der Rohbaustruktur in einem vorderen und/oder hinteren Bereich hier Batteriemodule der Antriebsbatterie einen Bauraum für einen gekapselten Bereich aufweist. In diesem gekapselten Bereich können beispielsweise elektrische Bauelemente untergebracht werden, welche im Falle eines thermischen Ereignisses nicht mit Ventinggas oder mitgeführten Partikeln beaufschlagt werden sollen.

### Dabei zeigen:

- Fig. 1: eine schematische Draufsicht auf einen elektrisch antreibbaren Kraftwagen, wobei bevorzugte Auslassöffnungen für aus einer Antriebsbatterie austretendes und über einen Entlüftungskanal geführtes Ventinggas angedeutet sind;
- Fig. 2: eine perspektivische Unteransicht auf eine Unterbaustruktur einer Karosserietragstruktur im Bodenbereich unterhalb einer Fahrgastzelle eines elektrisch antreibbaren Kraftwagen gemäß der Erfindung;
- Fig. 3a, 3b: eine Unteransicht sowie eine ausschnittsweise und äußerst schematische Perspektivansicht auf die Rohbaustruktur für einen elektrisch antreibbaren Kraftwagen gemäß einer ersten Ausführungsform, in welcher eine Ventinggas-Führung gemäß einer ersten Variante dargestellt ist;
- Fig. 4a, 4b: eine Unteransicht sowie eine schematische Darstellung einer Rohbaustruktur für einen elektrisch antreibbaren Kraftwagen, bei welcher eine Ventinggas-Führung gemäß einer zweiten Variante erläutert ist;
- Fig. 5a, 5b: eine ausschnittsweise Perspektivansicht sowie eine schematische Ansicht auf jeweilige Strukturbauteile der Rohbaustruktur, welche einen Entlüftungskanal für Ventinggas und mitgeführte Partikel bilden und innerhalb welchem eine Ventinggas-Behandlungseinrichtung in Form einer Konturierung oder dergleichen Labyrinthpfad vorgesehen ist; und in den
- Fig. 6a, 6b, 6c: jeweilige schematische Darstellungen alternativer Ventinggas-Behandlungseinrichtungen, wobei Fig. 6a einen Labyrinthpfad, Fig. 6b ein Filterelement und Fig. 6c eine Beaufschlagungseinrichtung für das Ventinggas beziehungsweise mitgeführte Partikel zeigen.

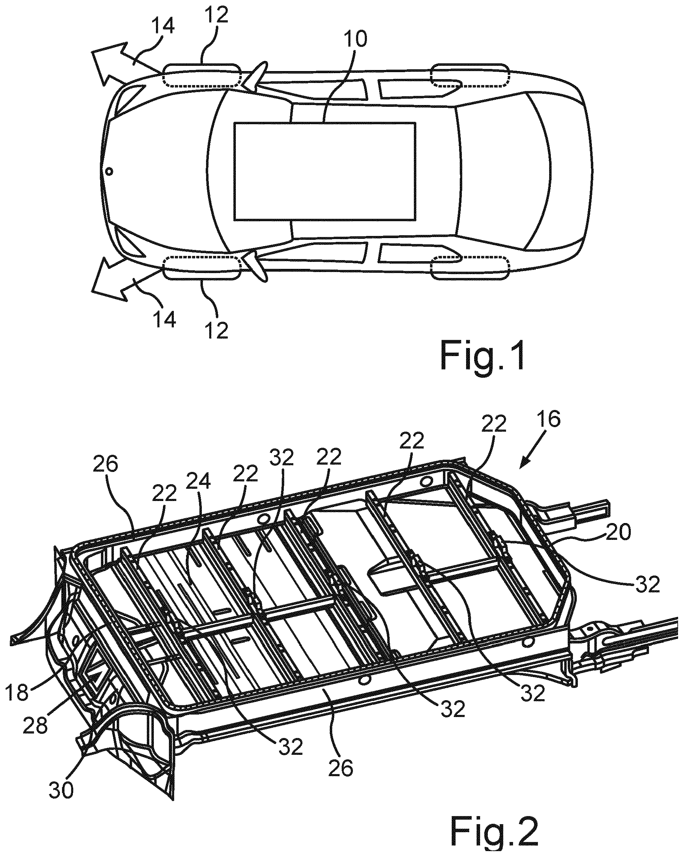

Fig. 1 zeigt in einer schematischen Draufsicht einen elektrisch antreibbaren Kraftwagen, welcher beispielsweise ausschließlich elektrisch (BEV - Battery Electric Vehicle) oder als Hybridfahrzeug (HEV - Hybrid Electric Vehicle) sowohl elektrisch auch als mit einem Verbrennungsmotor angetrieben werden kann. Erkennbar ist hierbei eine Antriebsbatterie 10, welche unterhalb einer Bodengruppe einer Rohbaustruktur des Kraftwagens auch im Weiteren noch näher beschriebene Weise verbaut ist. Üblicherweise beruhen derartige Energiespeicher als auch als Traktionsbatterie bezeichneten Antriebsbatterie 10 derzeit auf der Lithium-lonen-Technologie. Bei derartigen Antriebsbatterien beziehungsweise deren Batteriezellen oder Batteriemodulen kann es zu einer "Thermal Propagation", oder einem thermischen Ereignis beziehungsweise einem Wärmeübertrag kommen. Dies tritt unter anderem auf, wenn eine Batteriezelle durch einen internen Kurzschluss zu warm wird und sich die Materialien in einer exothermen Reaktion auflösen ("Thermal Runaway"). Die Temperatur steigt hierbei immer weiter an und es kann zum Öffnen der jeweiligen Batteriezelle und zum Brand innerhalb der Antriebsbatterie kommen. Die entstehende Wärme wird auf andere Zellen übertragen, sodass die eine überhitzte Batteriezelle zur Überhitzung weiterer Zellen beitragen kann, sodass das thermische Ereignis eintritt beziehungsweise noch größer wird. Kommt es dabei zu einem Öffnen der jeweiligen Batteriezellen beziehungsweise Batteriemodule, so wird ein sogenanntes Ventinggas und gegebenenfalls entsprechende Partikel freigesetzt. Diese erhebliche Gasmenge muss aus der Antriebsbatterie beziehungsweise deren Gehäuse herausgeführt werden, da ansonsten eine Gefahr für die Insassen des Fahrzeugs besteht. Dazu muss das bis zu 900° heiße Ventinggas außerhalb der Fluchtwege der Kraftwageninsassen aus dem Kraftwagen geleitet werden. Zudem ist das Ventinggas leicht entzündlich und Feuer außerhalb der Antriebsbatterie muss unbedingt vermieden werden. Die Partikel, die zusätzlich ausgestoßen werden, glühen und können so das Gas entzünden. Diese Entzündbarkeit des Gases wird erst außerhalb der Antriebsbatterie relevant, da im Inneren des Batteriegehäuses beziehungsweise -aufnahmeraums durch eine erhebliche Menge des Ventinggases nicht ausreichend Sauerstoff für eine Verbrennung zur Verfügung steht. Im vorliegenden Fall ist daher eine Rohbaustruktur vorgesehen, mittels welcher im Falle eines thermischen Ereignisses beziehungsweise Events das austretende Ventinggas seitlich hinter den jeweiligen hinteren Fahrzeugrädern 12 aus der Rohbaustruktur beziehungsweise dem Kraftwagen gemäß den Pfeilen 14 in Fig. 1 austritt.

In Fig. 2 ist ein Ausführungsbeispiel einer Rohbaustruktur für einen derart elektrisch antreibbaren Kraftwagen dargestellt, wobei von oben auf die im Fahrbetrieb einer Fahrbahn zuwandte Seite geblickt wird. Die Rohbaustruktur umfasst im vorliegenden Fall beispielsweise eine Bodengruppe 16 mit zwischen einem vorderen Querträger 18 und einem hinteren Querträger 20 angeordneten fünf Querträgern 22, welche sich horizontal und in Fahrzeugquerrichtung unterseitig eines Fahrzeugbodens 24 erstrecken. Außenseitig sind dabei die jeweiligen Querträger 18, 20, 22 mit einem jeweils seitlich zugeordneten Seitenschweller 26, genauer gesagt dessen Innenteil, verbunden. An dem jeweiligen Innenteil des entsprechenden Seitenschwellers 26 ist jeweils ein hier nicht erkennbares Außenteil angesetzt, wodurch die Seitenschweller 26 jeweilige, außenumfangsseitig geschlossene Hohlkammern aufweisen beziehungsweise begrenzen. Außerdem begrenzen die fünf Querträger 22 ebenfalls jeweils eine Kammer gemeinsam mit dem Fahrzeugboden 24.

Erkennbar ist des Weiteren ein Mittelkanal 28, welcher eine vordere Stirnwand 30 durchsetzt und im Weiteren unterhalb der jeweiligen Querträger 22 verläuft beziehungsweise außenumfangsseitig durch Mittelkanalbügel 32 umgriffen ist, sodass innerhalb beziehungsweise entlang dieses Mittelkanals 28 beispielsweise Medienschläuche, Kabel oder dergleichen verlegt werden können. Im vorliegenden Fall sind die jeweiligen Querträger 22 mit jeweils einer Vertiefung versehen, welche mit den Mittelkanalbügeln 32 geschlossen werden und somit die Medienschläuche, Kabel etc. lagefest fixieren. Zudem ist ein durchgängiger S-Schlag im Bereich des vorderen Endes der Bodengruppe 16 erkennbar, welcher dieser eine erhöhte Robustheit im Falle einer Frontalkollision des Kraftwagens mit einem Hindernis mit geringer Breitenüberdeckung verleiht. Dieser S-Schlag ist ein robuster Übergangsbereich von den vor der Stirnwand 30 im Kraftwagenvorbau verlaufenden Längsträgern, die in Fig. 2 nur teilweise dargestellt sind, hin zu den in Kraftwagenquerrichtung gesehen weiter außenliegenden Seitenschwellern 26, so dass insbesondere bei einem sogenannten "Small-Overlap-Anprall" dieser Übergangsbereich das zurückverlagerte Vorderrad abstützt und die Crashkräfte in die Seitenschweller 26 absetzt.

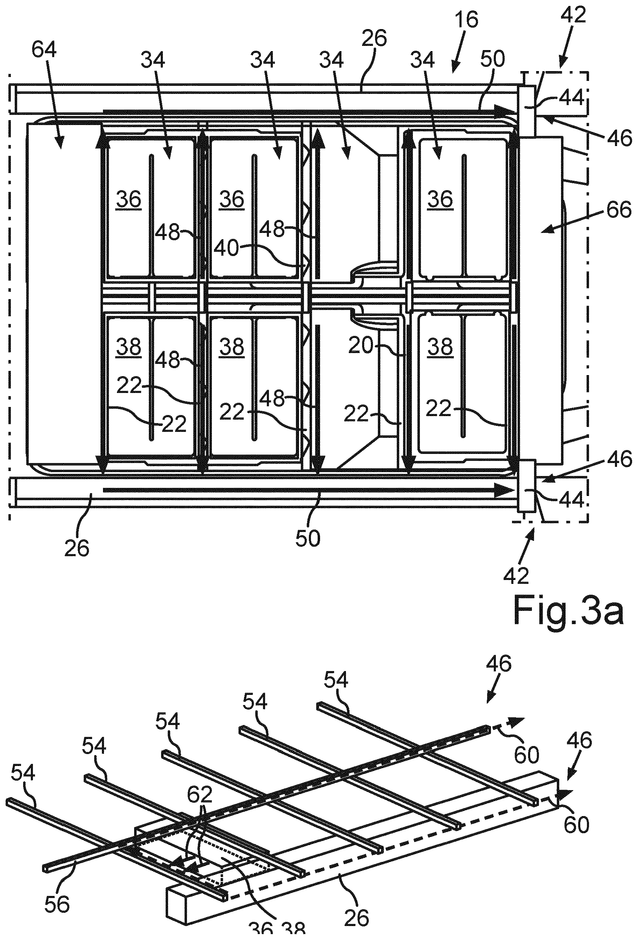

In Zusammenschau von Fig. 2 mit den Figuren 3a und 3b soll nun im Weiteren eine erste Variante einer Ventinggas-Führung erläutert werden, mittels welcher im Falle eines entsprechenden thermischen Ereignisses Ventinggas und zugehörige Partikel aus der Antriebsbatterie in die Umgebung des Kraftwagens geleitet werden kann beziehungsweise können.

Fig. 3a zeigt hierzu die Bodengruppe 16 gemäß Fig. 2 in einer ausschnittsweisen Unteransicht. Zu erkennen ist, dass die jeweiligen Querträger 22 sowie die Seitenschweller 26 einen jeweiligen Aufnahmeraum 34 umfangsseitig begrenzen, innerhalb welchem jeweilige Batteriezellen beziehungsweise zwei jeweilige Batteriemodule 36, 38 pro Aufnahmeraum 34 angeordnet sind. Kommt es nun innerhalb einer dieser Batteriezellen beziehungsweise Batteriemodule 36, 38 zu einem thermischen Ereignis, so entlassen die jeweiligen Batteriemodule 36, 38 ein entsprechendes Ventinggas und gegebenenfalls zugehörige Partikel in ihren jeweils benachbarten Querträger 22. Die Querträger 22 sind hierzu entsprechend gelocht, und zwar vorzugsweise versetzt zueinander, damit nicht das jeweils benachbarte Batteriemodul 36, 38 beziehungsweise eine jeweilige Eingangsöffnung 40, über welche das Ventinggas und die Partikel in den jeweiligen Querträger 22 eingeleitet werden, gegenseitig mit Gas beaufschlagt werden. Über den jeweiligen Querträger 22, welcher jeweils als Hohlkammerprofil ausgestaltet ist, gelangt das Ventinggas und die Partikel zum jeweiligen Seitenschweller 26, dessen schalenförmiges Innenteil jeweils im Anschlussbereich des zugehörigen Querträgers 22 gelocht ist, sodass das Ventinggas und die Partikel jeweils in den zugehörigen, durch die Innenschale und Außenschale als Hohlkammerprofil geschlossenen Seitenschweller gelangen kann beziehungsweise können. Das in den jeweiligen Seitenschweller 26 eingeleitete Ventinggas und die zugehörigen Partikel werden dann im Weiteren in der jeweiligen Hohlkammer des Seitenschwellers 26 in Richtung eines Radlaufes 42 an der Hinterachse des Kraftwagens geleitet. Dort ist jeweils eine Berstscheibe 44 im Bereich des hinteren Endes des entsprechenden Seitenschwellers 26 angedeutet, welche entsprechend zerstört wird, wenn Ventinggas oder zugehörige Partikel anliegen und der Druck und/oder die anstehende Hitze entsprechend hoch ist. Durch die jeweilige Berstscheibe 44 ist dabei eine jeweilige Auslassöffnung 46 am Ende des Seitenschwellers 26 verschlossen, über welches das Gas an die Umgebung abblasbar ist.

Wie in Fig. 3a durch entsprechende Pfeile 48, 50 dargestellt, sind durch die jeweiligen Strukturbauteile 22, 26 der Bodengruppe 16 in Form der Querträger 22 beziehungsweise der Seitenschweller 26 jeweilige Entlüftungskanäle gebildet, über welche aus dem jeweiligen Batteriemodul 36, 38 austretendes Ventinggas und zugehörige Partikel aus dem Fahrzeuginneren ins Freie beziehungsweise in die Umgebung des Kraftwagens geleitet werden können. Mit anderen Worten bilden die jeweiligen Querträger 22 und die Seitenschweller 26 jeweilige Entlüftungskanäle aus, entlang welchem das Ventinggas und die zugehörigen Partikel ausgeleitet werden können. Hierzu weist gemäß der in Fig. 3a gezeigten Variante der jeweilige Querträger 22 eine Einlassöffnung auf, über welche Ventinggas aus dem Batteriemodul 36, 38 oder dem Aufnahmeraum 34 in den entsprechenden Querträger einströmen, über die im jeweiligen Innenteil des Seitenschwellers 26 vorgesehene Öffnungen in den Hohlraum des jeweiligen Seitenschwellers 26 gelangen und anschließend in Richtung der Ausströmöffnung 46 ausströmen kann.

Fig. 3b zeigt in einer äußerst schematischen und perspektivischen Ansicht nochmals jeweilige Längs- beziehungsweise Querträger 54, 56 der Bodengruppe 16 über welche jeweilige Aufnahmeräume zur Aufnahme der Batteriemodule 36, 38 begrenzt sind. Zudem schließen sich außenseitig an die Querträger 56 jeweilige Seitenschweller 58 an, wovon lediglich einer dargestellt ist. Anhand der gestrichelten Linien 60 ist vorliegend nochmals ein jeweiliger Entlüftungskanal dargestellt, entlang welchem mit Pfeilen 62 dargestelltes Ventinggas durch jeweilige, als Hohlkammerprofile ausgestaltete Strukturbauteile der Rohbaustruktur ausgeleitet werden kann. Zu erkennen ist hier, dass auch in der Kraftwagenmitte, also zwischen den Seitenschwellern 58 ein beziehungsweise ein zusätzlicher mittiger Entlüftungskanal vorgesehen sein kann.

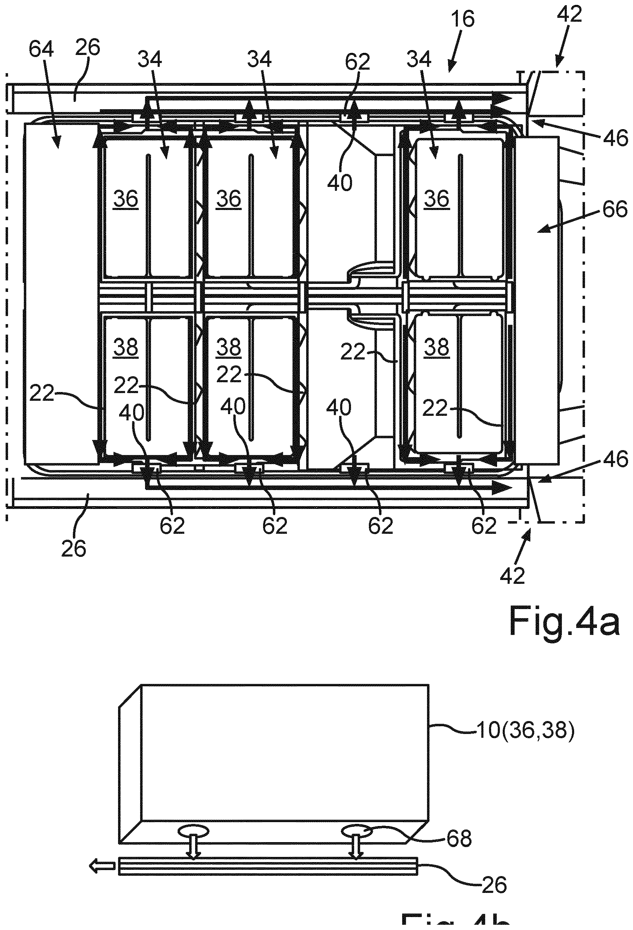

In Fig. 4a ist eine zweite Variante der Ventinggas-Führung dargestellt und zwar bei ansonsten identischer Bodengruppe 16 gemäß Fig. 2. Es soll daher nur auf die Unterschiede der Ausführungsform gegenüber Fig. 3a eingegangen werden.

Im vorliegenden Ausführungsbeispiel ist es vorgesehen, dass die Batteriemodule 36, 38 bei einem thermischen Ereignis entsprechendes Ventinggas und mitgerissene Partikel zwischen den jeweiligen Querträgern 22 in den zugehörigen Aufnahmeraum 34 beziehungsweise die entsprechende Modulkammer entlassen wird. Jede dieser Aufnahmeräume 34 beziehungsweise Modulkammern hat im Bereich der Innenschale des jeweiligen Seitenschwellers 26 eine Berstscheibe 62, welche entsprechend zerstört wird, wenn Ventinggas oder Partikel aus dem entsprechenden Batteriemodul 36, 38 in den Aufnahmeraum 34 und von dort aus in Richtung des seitlich zugeordneten Seitenschwellers 26 gelangt beziehungsweise gelangen. Die Anordnung dieser Berstscheiben 62 ist auch in Fig. 2 erkennbar.

Demzufolge sind im vorliegenden Ausführungsbeispiel die Querträger 22 durchgängig ausgebildet, das heißt ohne Einströmöffnungen 40, da sich diese im Bereich der jeweiligen Berstscheiben 62 befinden. Durch die durchgängige Ausgestaltung der Querträger 22 wird somit ein Überschlag an Nachbarmodule verhindert.

Über der Berstscheiben 62 sind somit im vorliegenden Ausführungsbeispiel im Bereich der Seitenschweller 26 die jeweiligen Eingangsöffnungen 40 vorgesehen, über welche das Ventinggas und die zugehörigen Partikel in den entsprechenden Seitenschweller 26 gelangen und von dort aus wiederum in Richtung der jeweiligen Auslassöffnung 46 am hinteren Ende des entsprechenden Seitenschwellers 26.

Aus Fig. 4a ist des Weiteren erkennbar, dass die Bodengruppe 16 in einem vorderen und hinteren Bereich 64, 66 der Batteriemodule 36, 38 der Antriebsbatterie 10 einen Bauraum für einen jeweiligen, gekapselten Bereich aufweist. In diesen gekapselten Bereichen sind beispielsweise empfindliche elektronische Bauteile angeordnet.

Fig. 4b zeigt in einer äußerst schematischen Darstellung nochmals diese Variante der Ventinggas-Führung, bei welcher aus der jeweiligen Batteriezelle 36, 38 austretendes Gas zunächst über ein Berstelement 68 des jeweiligen Modulgehäuses austritt und dann über gegebenenfalls ein weiteres Berstelement in das Innere des jeweils seitlich zugehörigen Seitenschwellers 26 gelangt, von wo aus die Abfuhr des Ventinggases und gegebenenfalls der zugehörigen Partikel erfolgt.

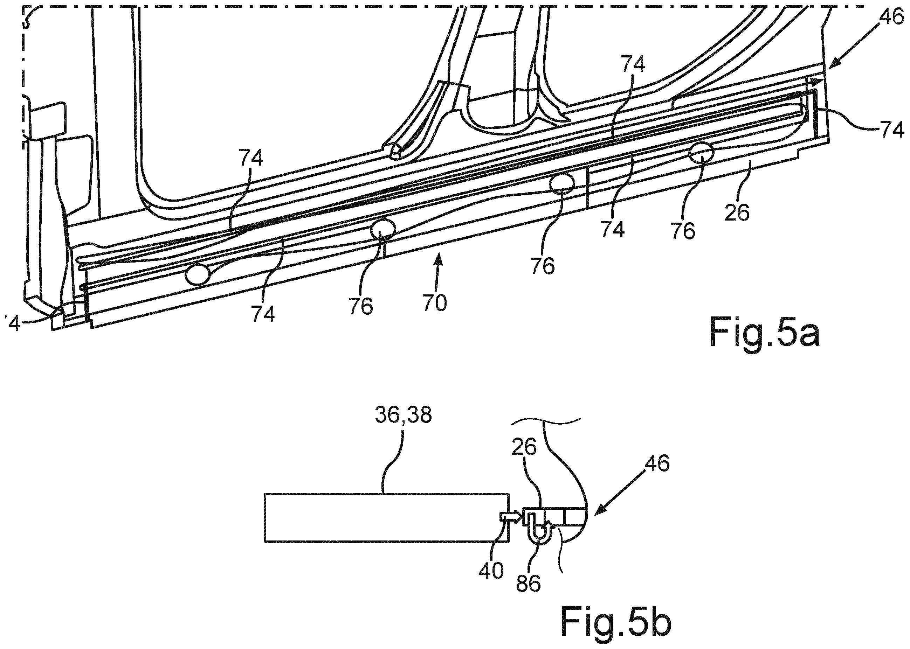

Um nun bei einem thermischen Ereignis die Sicherheit des Kraftwagens zu erhöhen, ist vorliegend innerhalb des durch die jeweiligen Strukturbauteile (Querträger, Längsträger, Seitenschweller) gebildeten jeweiligen Entlüftungskanal wenigstens eine Ventinggas-Behandlungseinrichtung 70 vorgesehen, wie diese beispielsweise im Zusammenhang mit Fig. 5a näher erläutert wird.

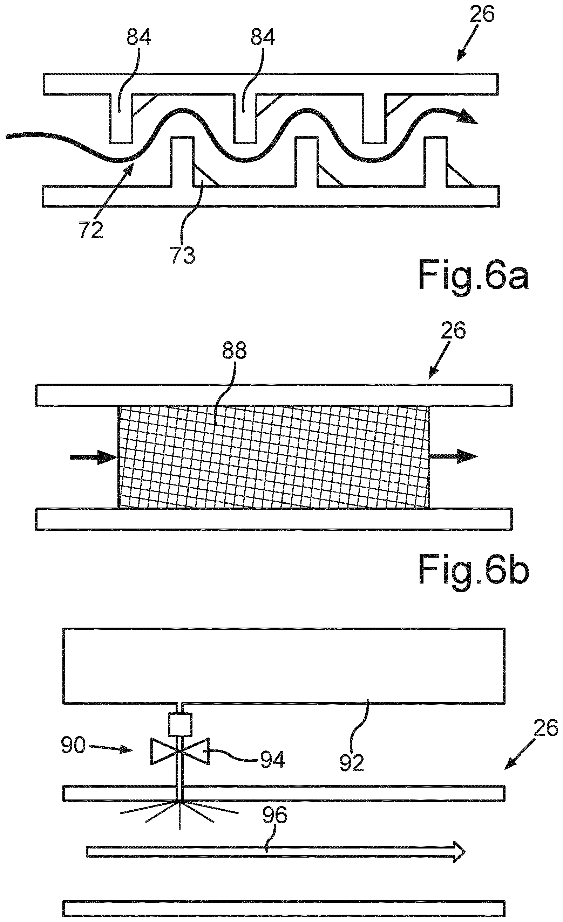

Fig. 5a zeigt hierbei eine Behandlungseinrichtung 70 in Form eines Labyrinthpfades, mittels welchem ein Strömungsweg des Ventinggases und gegebenenfalls mitgeführter Partikel erfolgt. Hierbei sind innerhalb der durch den Seitenschweller 26 begrenzten Kammer beispielsweise mehrere Strömungswände 72, 74 vorgesehen, durch welche einerseits ein normalerweise üblicher Strömungsweg innerhalb der Hohlkammern des Seitenschwellers 26 verlängert ist und beispielsweise durch die in Fig. 6a dargestellten Hindernisse 84 Möglichkeiten gegeben sind, um Partikel innerhalb des Ventinggases zu sammeln beziehungsweise abzuscheiden. Durch diesen Labyrinthpfad wird somit einerseits in Folge der Verlängerung des Strömungswegs eine Abkühlung des Ventinggases und gegebenenfalls mitgeführter Partikel erreicht, und andererseits werden die mit dem Ventinggas mitgeführten Partikel beispielsweise an den Hindernissen 84 zurückgehalten. Im Ergebnis wird somit erreicht, dass nach Passieren der Behandlungseinrichtung 70 das Ventinggas und gegebenenfalls dessen Partikel deutlich abgekühlt beziehungsweise im Falle der Partikel zumindest im Wesentlichen abgeschieden sind. Das aus dem Seitenschweller 26 beziehungsweise dem Entlüftungskanal austretende Gas ist somit erheblich unkritischer hinsichtlich eines Entzündens.

Bei dem in Fig. 5a darstellten Ausführungsbeispiel der Behandlungseinrichtung 70 ist der Strömungspfad insgesamt mäanderförmig ausgebildet, wobei mehrere in Längsrichtung des Seitenschwellers 26 verlaufende Strömungsabschnitte in Kraftwagenhochrichtung übereinanderliegen und die mit Berstscheiben zunächst verschlossenen, hier insgesamt vier Öffnungen 76, über welche das Ventinggas in den Seitenschweller 26 eingeleitet wird, sich im Bereich des untersten Strömungsabschnitts befinden. Wird nun das Ventinggas über zumindest eine der Öffnungen 76 eingeleitet, so strömt es gemäß der Darstellung der Fig. 5a zunächst nach rechts bis an die Strömungswand 74 und gelangt von dort an den darüber befindlichen zweiten Strömungsabschnitt, der vom Ventinggas gemäß der Darstellung der Fig. 5a von rechts nach links durchströmt wird. Am Ende des zweiten Strömungsabschnitts gelangt das Ventinggas in den darüberliegenden, dritten Strömungsabschnitt des Entlüftungskanals, der vom Ventinggas gemäß der Darstellung der Fig. 5a von links nach rechts in Richtung auf beziehungsweise zur Auslassöffnung 46, über die das Ventinggas an die Umgebung abblasbar ist. Wichtig ist, dass die Strömungsrichtung des Ventinggases innerhalb des Seitenschwellers mehrmals wechselt, also hin und her geht. Insgesamt ist hiermit ein vom Ventinggas durchströmter Strömungspfad innerhalb des Seitenschwellers 26 geschaffen, der länger, vorzugsweise deutlich länger, insbesondere um ein mehrfaches länger ist als die Gesamtlänge des Seitenschwellers 26. Dies führt wiederum zu einer erhöhten Abkühlung des Ventinggases.

Fig. 5b zeigt schematisch eine entsprechende Konturierung eines Labyrinthpfades, bei welchem Ventinggas entsprechend so umgeleitet wird (Pfeil 86) in einer Behandlungseinrichtung 70, dass der im Zusammenhang mit Fig. 5a beschriebene Effekt entsteht. Diese Konturierung des oder eines Labyrinthpfades, wie er auch anhand der Fig. 6a bis 6c nachfolgend noch näher erläutert wird, kann über den gesamten Strömungsweg des Ventinggases innerhalb des Seitenschwellers 26 vorgesehen sein.

In den Figuren 6a bis 6c sind schließlich in einer jeweiligen schematischen Ansicht jeweilige alternative Ausführungsformen der Ventinggas-Behandlungseinrichtung 70 dargestellt.

So zeigt Fig. 6a eine entsprechende Konturierung beziehungsweise einen Labyrinthpfad 71 im Seitenschweller 26, um eine Partikelabscheidung zu ermöglichen. Zudem ergibt sich durch den Labyrinthpfad ein verlängerter Strömungsweg mit den bereits im Zusammenhang mit den Figuren 5a und 5b beschriebenen Vorteilen. An jeweiligen Hindernissen 84 werden wiederum mit den Ventinggas mitgeführte Partikel gesammelt.

Fig. 6b zeigt eine Ventinggas-Behandlungseinrichtung 70, welche ein Filter 88 oder dergleichen Filterkartusche umfasst, welche beispielsweise innerhalb des Seitenschwellers 26 angeordnet ist. Beim Durchströmen des Filters 88 durch das Ventinggas und die zugehörigen Partikel wird somit ein Abscheiden beziehungsweise Herausfiltern der Partikel erreicht. Zudem wird durch Verwirbelung gegebenenfalls auch eine Abkühlung des Ventinggases erreicht.

Fig. 6c zeigt schließlich eine Ventinggas-Behandlungseinrichtung 70 mit einer Beaufschlagungseinrichtung 90, mittels welcher das Ventinggas und/oder die mit diesem mitgeführten Partikel mit einem Medium, insbesondere mit Wasser, beaufschlagbar ist. Hierzu ist im vorliegenden Fall eine Kühlwasserleitung 92 erkennbar, wobei über ein gesteuertes Ventil 94 Wasser oder dergleichen in den Entlüftungskanal beziehungsweise in den Seitenschweller 26 eingespritzt werden kann, um ein mit einem Pfeil 96 angedeutetes Ventinggas und zugehörige Partikel abzukühlen.

## Patentansprüche

1. Rohbaustruktur für einen elektrisch antreibbaren Kraftwagen, mit wenigstens einem durch eine Mehrzahl von miteinander verbundenen, jeweilige Hohlkammern begrenzenden Strukturbauteilen (22, 26) gebildeten Entlüftungskanal, welcher wenigstens eine Eingangsöffnung (40) zum Einströmen von aus einer Antriebsbatterie (10) des Kraftwagens im Falle eines thermischen Ereignisses austretendem Ventinggas aufweist, und welcher wenigstens eine Auslassöffnung (46) aufweist, über welche das Ventinggas in eine Umgebung des Kraftwagens auslassbar ist,
**dadurch gekennzeichnet, dass**
innerhalb des Entlüftungskanals (26) wenigstens eine Ventinggas-Behandlungseinrichtung (70) zur gezielten Behandlung des Ventinggases und/oder der mit diesem mitgeführten Partikel angeordnet ist.

2. Rohbaustruktur nach Anspruch 1,
**dadurch gekennzeichnet, dass**
die Ventinggas-Behandlungseinrichtung (70) zum Abkühlen des Ventinggases und der mitgeführten heißen Partikel ausgebildet ist.

3. Rohbaustruktur nach Anspruch 1 oder 2,
**dadurch gekennzeichnet, dass**
die Ventinggas-Behandlungseinrichtung (70) zum Sammeln oder Filtern der mit dem Ventinggas mitgeführten Partikel ausgebildet ist.

4. Rohbaustruktur nach einem der vorhergehenden Ansprüche,
**dadurch gekennzeichnet, dass**
die Ventinggas-Behandlungseinrichtung (70) eine Konturierung oder dergleichen Labyrinthpfad (72) zum Verlängern des Strömungsweges des Ventinggases durch den Entlüftungskanal und/oder zum Sammeln von mit dem Ventinggas mitgeführten Partikeln aufweist.

5. Rohbaustruktur nach einem der vorhergehenden Ansprüche,
**dadurch gekennzeichnet, dass**
die Ventinggas-Behandlungseinrichtung (70) ein Filter (88) zum Sammeln von mit dem Ventinggas mitgeführten Partikeln aufweist.

6. Rohbaustruktur nach einem der vorhergehenden Ansprüche,
**dadurch gekennzeichnet, dass**
die Ventinggas-Behandlungseinrichtung (70) eine Beaufschlagungseinrichtung (90) aufweist, mittels welcher das Ventinggas und/oder die mit diesem mitgeführten Partikel mit einem Medium, insbesondere mit Wasser, beaufschlagbar sind/ist.

7. Rohbaustruktur nach einem der vorhergehenden Ansprüche,
**dadurch gekennzeichnet, dass**
eine Bodengruppe (16) der Rohbaustruktur mehrere Querträger (22) umfasst, welche außenseitig mit jeweiligen Seitenschwellern (26) verbunden sind und mit diesen einen jeweiligen Aufnahmeraum (34) für wenigstens ein Batteriemodul (36, 38) des Antriebsspeichers (10) begrenzen, wobei jeweilige Eingangsöffnungen (40) für Ventinggas in den Querträgern (22) vorgesehen sind.

8. Rohbaustruktur nach einem der Ansprüche 1 bis 7,
**dadurch gekennzeichnet, dass**
eine Bodengruppe (16) der Rohbaustruktur mehrere Querträger (22) umfasst, welche außenseitig mit jeweiligen Seitenschwellern (26) verbunden sind und mit diesen einen jeweiligen Aufnahmeraum (34) für wenigstens ein Batteriemodul (36, 38) des Antriebsspeichers (10) begrenzen, wobei jeweilige Eingangsöffnungen (40) für Ventinggas in den Seitenschwellern (26) vorgesehen sind.

9. Rohbaustruktur nach einem der Ansprüche 7 oder 8,
**dadurch gekennzeichnet, dass**
die Querträger (22) im Bereich eines Mittelkanals (28) über jeweilige Mittelkanalbügel (32) geschlossen sind.

10. Rohbaustruktur nach einem der vorhergehenden Ansprüche,
**dadurch gekennzeichnet, dass**
eine Bodengruppe (16) der Rohbaustruktur in einem vorderen und/oder hinteren Bereich (64, 66) jeweiliger Batteriemodule (36, 38) der Antriebsbatterie (10) einen Bauraum für einen gekapselten Bereich aufweist.

## Claims

1. Body-in-white structure for an electrically drivable motor vehicle, having at least one ventilation channel formed by a plurality of structural components (22, 26) which are interconnected and delimit respective cavities, which ventilation channel comprises at least one inlet opening (40) for inflow of venting gas exiting a drive battery (10) of the motor vehicle in the event of a thermal event, and which has at least one outlet opening (46) via which the venting gas can be discharged into a surroundings of the motor vehicle,
**characterized in that**
at least one venting gas treatment device (70) for the targeted treatment of the venting gas and/or the particles entrained therewith is arranged within the ventilation channel (26).

2. Body-in-white structure according to claim 1,
**characterized in that**
the venting gas treatment device (70) is designed to cool the venting gas and the entrained hot particles.

3. Body-in-white structure according to either claim 1 or claim 2,
**characterized in that**
the venting gas treatment device (70) is designed to collect or filter the particles entrained with the venting gas.

4. Body-in-white structure according to any of the preceding claims,
**characterized in that**
the venting gas treatment device (70) comprises contouring or a similar labyrinth path (72) for extending the flow path of the venting gas through the ventilation channel and/or for collecting particles entrained with the venting gas.

5. Body-in-white structure according to any of the preceding claims,
**characterized in that**
the venting gas treatment device (70) comprises a filter (88) for collecting particles entrained with the venting gas.

6. Body-in-white structure according to any of the preceding claims,
**characterized in that**
the venting gas treatment device (70) comprises an application device (90), by means of which a medium, in particular water, can be applied to the venting gas and/or the particles entrained therewith.

7. Body-in-white structure according to any of the preceding claims,
**characterized in that**
an underframe assembly (16) of the body-in-white structure comprises a plurality of cross members (22) which are connected on the outside to respective side sills (26) and delimit therewith a relevant receiving space (34) for at least one battery module (36, 38) of the drive accumulator (10), respective inlet openings (40) for venting gas being provided in the cross members (22).

8. Body-in-white structure according to any of claims 1 to 7,
**characterized in that**
an underframe assembly (16) of the body-in-white structure comprises a plurality of cross members (22) which are connected on the outside with respective side sills (26) and delimit therewith a relevant receiving space (34) for at least one battery module (36, 38) of the drive accumulator (10), respective inlet openings (40) for venting gas being provided in the side sills (26).

9. Body-in-white structure according to either claim 7 or claim 8,
**characterized in that**
the cross members (22) are closed in the region of a central channel (28) by means of respective central channel brackets (32).

10. Body-in-white structure according to any of the preceding claims,
**characterized in that**
an underframe assembly (16) of the body-in-white structure comprises an installation space for an encapsulated region in a front and/or rear region (64, 66) of respective battery modules (36, 38) of the drive battery (10).

## Revendications

1. Structure de carrosserie pour une voiture à propulsion électrique, comportant au moins un canal de ventilation formé par une pluralité de composants structuraux (22, 26) qui sont reliés les uns aux autres et délimitent des chambres creuses respectives, lequel canal de ventilation présente au moins une ouverture d'entrée (40) pour l'entrée de gaz d'évacuation sortant d'une batterie de propulsion (10) de la voiture en cas d'événement thermique, et lequel présente au moins une ouverture de sortie (46), par l'intermédiaire de laquelle le gaz d'évacuation peut être libéré dans un environnement de la voiture,
**caractérisée en ce que**
au moins un appareil de traitement de gaz d'évacuation (70) est agencé à l'intérieur du canal de ventilation (26) pour le traitement ciblé du gaz d'évacuation et/ou des particules transportées par celui-ci.

2. Structure de carrosserie selon la revendication 1,
**caractérisée en ce que**
l'appareil de traitement de gaz d'évacuation (70) est conçu pour le refroidissement du gaz d'évacuation et des particules chaudes transportées par celui-ci.

3. Structure de carrosserie selon la revendication 1 ou 2,
**caractérisée en ce que**
l'appareil de traitement de gaz d'évacuation (70) est conçu pour la collecte ou le filtrage des particules transportées par le gaz d'évacuation.

4. Structure de carrosserie selon l'une des revendications précédentes,
**caractérisée en ce que**
l'appareil de traitement de gaz d'évacuation (70) présente un contour ou un chemin de labyrinthe (72) similaire pour la prolongation du trajet d'écoulement du gaz d'évacuation à travers le canal de ventilation et/ou pour la collecte de particules transportées par le gaz d'évacuation.

5. Structure de carrosserie selon l'une des revendications précédentes,
**caractérisée en ce que**
l'appareil de traitement de gaz d'évacuation (70) présente un filtre (88) pour la collecte de particules transportées par le gaz d'évacuation.

6. Structure de carrosserie selon l'une des revendications précédentes,
**caractérisée en ce que**
l'appareil de traitement de gaz d'évacuation (70) présente un appareil d'alimentation (90) à l'aide duquel le gaz d'évacuation et/ou les particules transportées par celui-ci sont soumis à l'action d'un milieu, en particulier de l'eau.

7. Structure de carrosserie selon l'une des revendications précédentes,
**caractérisée en ce que**
un dessous de caisse (16) de la structure de carrosserie comprend plusieurs traverses (22), lesquelles sont reliées côté extérieur à des bas de caisse (26) respectifs et délimitent, avec ceux-ci, un espace de réception (34) respectif pour au moins un module de batterie (36, 38) de l'accumulateur de propulsion (10), dans laquelle des ouvertures d'entrées (40) respectives pour le gaz d'évacuation sont prévues dans les traverses (22).

8. Structure de carrosserie selon l'une des revendications 1 à 7,
**caractérisée en ce que**
un dessous de caisse (16) de la structure de carrosserie comprend plusieurs traverses (22), lesquelles sont reliées côté extérieur à des bas de caisse (26) respectifs et délimitent, avec ceux-ci, un espace de réception (34) respectif pour au moins un module de batterie (36, 38) de l'accumulateur de propulsion (10), dans laquelle des ouvertures d'entrées (40) respectives pour le gaz d'évacuation sont prévues dans les bas de caisse (26).

9. Structure de carrosserie selon l'une des revendications 7 ou 8,
**caractérisée en ce que**
les traverses (22) dans la zone d'un canal central (28) sont fermées par le biais d'arceaux de canal central (32) respectifs.

10. Structure de carrosserie selon l'une des revendications précédentes,
**caractérisée en ce que**
un dessous de caisse (16) de la structure de carrosserie dans une zone avant et/ou arrière (64, 66) de modules de batterie (36, 38) respectifs de la batterie de propulsion (10) présente un espace de montage pour une zone encapsulée.
